# EUROPÄISCHE PATENTSCHRIFT

(11) **EP 2 790 950 B1**
(45) Veröffentlichungstag und Bekanntmachung des Hinweises auf die Patenterteilung: **22.07.2015**
(21) Anmeldenummer: 12780453.2
(22) Anmeldetag: 15.10.2012
(51) Int. Cl.: B60K 26/02

(54) **VERFAHREN UND STEUERGERÄT ZUM STEUERN EINES HAPTISCHEN FAHRPEDALS IN EINEM KRAFTFAHRZEUG BASIEREND AUF SITZINFORMATIONEN**
METHOD AND CONTROL UNIT FOR CONTROLLING A HAPTIC ACCELERATOR PEDAL IN A MOTOR VEHICLE BASED ON SEAT DATA
PROCÉDÉ ET APPAREIL DE COMMANDE POUR COMMANDER UNE PÉDALE D'ACCÉLÉRATEUR HAPTIQUE DANS UN VÉHICULE AUTOMOBILE SUR BASE D'INFORMATIONS VENANT DU SIÈGE

(30) Priorität: 12.12.2011 DE 102011088266
(43) Veröffentlichungstag der Anmeldung: 22.10.2014
(73) Patentinhaber: Robert Bosch GmbH, 70442 Stuttgart (DE)
(72) Erfinder: HENNING, Daniel, 74372 Sersheim (DE)
(86) Internationale Anmeldenummer: PCT/EP2012/070366
(87) Internationale Veröffentlichungsnummer: WO 2013/087254

(56) Entgegenhaltungen:
- EP-A1- 1 707 462
- EP-A1- 1 785 326

## Beschreibung

### Gebiet der Erfindung

Die vorliegende Erfindung betrifft ein Verfahren sowie ein Steuergerät zum Steuern eines haptischen Fahrpedals in einem Kraftfahrzeug, sowie ein Computerprogrammprodukt und ein ein solches speicherndes computerlesbares Medium, die dazu ausgelegt sind, das erfindungsgemäße Verfahren durch ein programmierbares Steuergerät ausführen zu können.

### Stand der Technik

In modernen Kraftfahrzeugen wird der Fahrer durch eine Vielzahl von zur Verfügung gestellten Informationen beim Führen des Fahrzeugs unterstützt. Beispielsweise kann es hilfreich sein, dem Fahrer Rückmeldungen über bestimmte Fahrzustände in Form von Signalen zu geben, um die Sicherheit beim Fahren oder den Komfort des Fahrers erhöhen zu können oder Treibstoff einzusparen. Diese Rückmeldungen können auf verschiedene Weise, wie z.B. optisch oder akustisch, bereitgestellt werden.

In modernen Fahrzeugen werden zusätzlich auch Möglichkeiten der haptischen Rückmeldung an den Fahrer über ein Fahrpedal des Fahrzeugs implementiert. Das Fahrpedal ist hierzu mit einem Aktuator ausgestattet, der es ermöglicht, das Fahrpedal gezielt mit einer Kraft zu beaufschlagen. Beispielsweise kann dadurch die Kraft, die vom Fahrer aufgebracht werden muss, um das Fahrpedal nieder zu drücken, durch Erzeugen einer geeigneten Gegenkraft mit Hilfe des Aktuators variiert werden. Alternativ kann das Fahrpedal in Vibrationen versetzt werden oder es kann in anderer Weise ein für den Fahrer haptisch wahrnehmbares Signal über das Fahrpedal an den Fahrer weiter gegeben werden. Auf diese Weise können dem Fahrer durch dessen haptische Wahrnehmung Hinweise und Warnungen mitgeteilt oder auch Komfortfunktionen bereitgestellt werden, ohne dass dieser durch optische oder akustische Signale vom Beobachten des Verkehrs abgelenkt würde.

DE 25 55 429 beschreibt ein System zur Erzeugung von taktilen bzw. haptisch wahrnehmbaren Signalen in einem Fahrzeug.

### Offenbarung der Erfindung

Die vorliegende Erfindung ermöglicht in ihren Ausführungsformen eine für den Fahrer vorteilhafte Ausgestaltung eines über das Fahrpedal weitergegebenen haptischen Signals. Insbesondere können eine Intensität des haptischen Signals oder ein Zeitpunkt, zu dem das haptische Signal generiert wird, vorteilhaft an die Bedürfnisse des Fahrers sowie an eine jeweilige Fahrsituation angepasst werden.

Bei dem vorgeschlagenen Verfahren zum Steuern eines haptischen Fahrpedals in einem Kraftfahrzeug wird zunächst eine Sitzinformation mit Hilfe wenigstens eines Sitzsensors erfasst und anschließend das haptische Fahrpedal hinsichtlich einer Eigenschaft, mit der das Fahrpedal einem Fahrer ein haptisch wahrnehmbares Signal übermittelt, unter Berücksichtigung dieser Sitzinformation angesteuert. Die Sitzinformation kann hierbei eine Information über eine Belegung, eine Belastung und/oder eine Positionierung wenigstens eines Sitzes in dem Kraftfahrzeug beinhalten.

Eine dem erfindungsgemäßen Ansteuerungsverfahren zugrunde liegende Idee kann dabei unter anderem darin gesehen werden, dass in modernen Fahrzeugen meist Sitzsensoren installiert sind, die Informationen über eine aktuelle Position, eine Belegung und/oder eine Kraft, mit der ein Fahrer auf einem Sitz lastet, angeben, und dass diese Informationen vorteilhaft auch beim Steuern des haptischen Fahrpedal in dem Kraftfahrzeug genutzt werden können.

Gemäß einer Ausführungsform beinhaltet die Sitzinformation eine Information über ein Gewicht eines auf einem Fahrersitz sitzenden Fahrers des Kraftfahrzeugs. Die Intensität, mit der das haptische Fahrpedal dem Fahrer das haptisch wahrnehmbare Signal übermittelt, soll hierbei in Abhängigkeit von dem erfassen Gewicht des Fahrers eingestellt werden. Die Intensität der Signalübermittlung kann hierbei mit der Kraft und/oder der Amplitude, mit das haptische Fahrpedal von dem Aktuator betätigt wird, korrelieren.

Dieser Ausführungsform liegen unter anderem die folgende Idee und die folgenden Gedanken zugrunde:

Bei einem eine Gegenkraft erzeugenden haptischen Fahrpedal muss der Fahrer zu jeder Zeit die Möglichkeit haben und in der Lage sein, eine haptische Rückmeldung des Fahrpedals und die damit verbundene Gegenkraft auf das Fahrpedal durch seine eigene Kraft zu überdrücken. Bei bisherigen aktiven Fahrpedalen sind die Funktionalitäten in ihrer Art und Stärke fest in einem diese Funktionalitäten regelnden Steuergerät eingestellt. Sie sind dabei unabhängig von der Position, Größe und Gewicht des aktuell das Fahrzeug steuernden Fahrers vorgegeben.

Ferner gibt es bei modernen Fahrzeugen häufig Sitzsensoren, die nicht nur erfassen können, ob ein Sitz in einem Fahrzeug belegt ist oder nicht, um beispielsweise ein "Gurt anlegen"-Signal geeignet angeben zu können, sondern die weiterhin dazu ausgestaltet sind, auch ein Gewicht, mit der eine Person auf dem Sitz lastet, zumindest grob zu erkennen, um z.B. Zeitpunkt und Stärke einer Airbag-Auslösung dem Personengewicht anpassen zu können.

Es wird nun vorgeschlagen, die eine Belastung des Fahrersitzes angebende Information von dem Sitzsensor zu nutzen, um die Kraft und/oder Amplitude, mit der von dem Fahrpedal ein haptisch wahrnehmbares Signal an den Fahrer weitergeben wird, geeignet einzustellen.

Hierdurch kann beispielsweise berücksichtigt werden, dass eine 40 kg schwere Person eine von einem aktiven Fahrpedal erzeugte Gegenkraft anders empfindet und wahrnimmt als beispielsweise eine 120 kg schwere Person.

Ergänzend oder alternativ kann die Sitzinformation eine Information über eine aktuelle Positionierung des Fahrersitzes beinhalten. Beim Steuern des haptischen Fahrpedals kann dann die Intensität, mit der das haptisch wahrnehmbare Signal übermittelt wird, in Abhängigkeit von der erfassten Positionierung des Fahrersitzes eingestellt werden.

Diese Ausführungsform kann der Beobachtung Rechnung tragen, dass eine von einem Fahrer auf ein Fahrpedal ausgeübte Kraft stark von der Position abhängt, in der der Fahrer relativ zu dem Fahrpedal sitzt. Beispielsweise kann ein Fahrer, der auf einer Sitzfläche sitzt, die in etwa auf gleicher Höhe mit dem Fahrpedal angeordnet ist, eine wesentlich höhere Kraft ausüben als ein Fahrer, dessen Sitzfläche wesentlich über dem Fahrpedal angeordnet ist.

Durch die geeignete Einstellung der von dem Fahrpedal erzeugten Gegenkraft in Abhängigkeit eines erfassten Gewichts eines Fahrers bzw. in Abhängigkeit einer erfassten Positionierung des Fahrersitzes kann eine Intensität einer von dem Fahrpedal erzeugten Rückmeldung an den Fahrer für jeden Fahrer individuell erzeugt werden. Beispielsweise kann die zu erzeugende Intensität automatisch aus einem diese Funktion regelndem Steuergerät abgerufen werden. Es werden keine manuellen Einstellungen vor Fahrtantritt benötigt. Die Rückmeldungsintensität kann dabei derart eingestellt werden, dass sie von dem Fahrer als angenehm und richtig dosiert empfunden wird und somit seine Akzeptanz bezüglich des aktiven haptischen Fahrpedals erhöht wird.

Gemäß einer weiteren Ausführungsform der Erfindung wird beim Steuern des haptischen Fahrpedals ein Zeitpunkt, zu dem das haptische Fahrpedal dem Fahrer das haptisch wahrnehmbare Signal übermittelt, in Abhängigkeit von einer erfassten Information über eine Belegung von Sitzen in dem Fahrzeug und/oder über ein Gewicht von auf Sitzen in dem Fahrzeug sitzenden Personen eingestellt.

Ideen zu dieser Ausführungsform können als auf den folgenden Überlegungen basierend angesehen werden:

Bei beispielsweise der Funktionalität des so genannten Ausrollassistenten kann einem Fahrer z.B. auf einer Bundesstraße der Zeitpunkt signalisiert werden, zu dem er eine Betätigung des Gaspedals des Fahrzeugs beenden kann und das Fahrzeug ausrollen lassen kann, so dass es beispielsweise an einem Ortseingang oder am Beginn einer geschwindigkeitsbegrenzten Zone eine gewünschte Sollgeschwindigkeit erreicht haben wird. Zusätzlich zu geografischen Informationen kann hierbei auch das Gesamtgewicht des Fahrzeugs relevant sein. Beispielsweise können sich die kinetische Energie des Fahrzeugs und damit der Ausrollweg erheblich unterscheiden, je nach dem, ob lediglich eine einzige leichte Person in dem Fahrzeug sitzt oder beispielsweise fünf schwergewichtige Personen das Fahrzeug belasten.

Es wird daher vorgeschlagen, ein Gesamtgewicht des Fahrzeugs, einschließlich der Insassen, mit Hilfe der Sitzsensoren genauer zu bestimmen als dies ohne diese zusätzliche Information möglich wäre. Aus den erfassten Informationen über die Sitzbelegungen bzw. die Sitzbelastungen kann dabei eine Abschätzung eines aktuellen Gesamtgewichtes des Fahrzeugs ermittelt werden und diese Abschätzung dann beim Steuern des Zeitpunkts, zu dem das haptische Fahrpedal das haptisch wahrnehmbare Signal erzeugt, herangezogen werden.

Sofern in dem Fahrzeug lediglich Sitzsensoren enthalten sind, die eine vorliegende oder mangelnde Belegung der Sitze angeben, kann dabei für die Abschätzung des Gesamtgewichts beispielsweise für jeden belegten Sitz von einem Durchschnittsgewicht für einen Insassen von beispielsweise 75 kg ausgegangen werden.

Sofern die Sitzsensoren weiterhin ermöglichen, eine Information über das Gewicht des jeweiligen Insassen zu liefern, kann das Gesamtgewicht des Fahrzeugs noch genauer ermittelt werden. Das Gesamtgewicht des Fahrzeugs ergibt sich dabei aus dem Leergewicht plus dem abgeschätzten Gewicht der auf den Fahrzeugsitzen sitzenden Personen.

Um die Funktionalität des Ausrollassistenten möglichst genau implementieren zu können, kann der Zeitpunkt, zu dem das haptisch wahrnehmbare Signal erzeugt werden soll, basierend auf dem ermittelten Gesamtgewicht sowie einer ermittelten Information über eine aktuelle Geschwindigkeit des Fahrzeugs sowie über eine zukünftig zu erreichende Geschwindigkeit des Fahrzeugs eingestellt werden.

Mit anderen Worten kann gemessen werden, wie schnell das Fahrzeug derzeit fährt und ergänzend kann beispielsweise aus Navigationsdaten ermittelt werden, wie schnell das Fahrzeug an einer bestimmten Stelle der vorliegenden Fahrstrecke sein soll. Beispielsweise kann hierzu aus den Navigationsdaten eine Ortseinfahrt oder der Beginn einer geschwindigkeitsbegrenzten Zone ermittelt werden. Unter Berücksichtigung der Information über das abgeschätzte tatsächliche Gesamtgewicht des Fahrzeugs kann dann errechnet werden, wie lange das Fahrzeug ausrollen muss, um die zu erreichende Geschwindigkeit an der gewünschten Position tatsächlich anzunehmen und dem Fahrer kann, basierend auf dieser Berechnung, zum korrekten Zeitpunkt ein haptisches Signal angezeigt werden, das ihm signalisiert, dass er jetzt das Fahrpedal des Fahrzeugs nicht weiter betätigen sollte. Auf diese Weise kann eine erhebliche Kraftstoffeinsparung realisiert werden. Dabei kann aufgrund der zusätzlichen Information über das Gewicht der Insassen das Gesamtgewicht des Fahrzeugs so genau abgeschätzt werden, dass der haptisch signalisierte Ausrollweg dem Fahrer als richtig positioniert erscheint, d.h. kein zusätzliches Beschleunigen oder Abbremsen während des Ausrollens nötig ist, was beim Fahrer die Akzeptanz des Ausrollassistenten erheblich erhöhen kann.

Die Präzision, mit der der Ausrollassistent den Beginn des Ausrollens angibt, kann noch weiter gesteigert werden durch Berücksichtigung weiterer Informationen, beispielsweise hinsichtlich eines Gefälles oder einer Steigung der befahrenen Strecke.

Die oben beschriebenen Ausführungsformen von erfindungsgemäßen Verfahren und die damit erreichbaren Funktionalitäten können durch ein in dem Fahrzeug vorgesehenes Steuergerät zum Steuern des haptischen Fahrpedals implementiert werden.

Das Steuergerät kann dabei dazu ausgelegt sein, über geeignete Schnittstellen Signale von Sitzsensoren zu empfangen und diese geeignet weiter zu verarbeiten, um daraus Ansteuerungssignale für das haptische Fahrpedal zu genieren. Das Steuergerät kann diese Funktionen in Hardware und/oder in Software implementieren. Da geeignete Sitzsensoren zur Ermittlung von Sitzpositionen, Sitzbelegungen und/oder Sitzbeladungen ohnehin bereits in vielen modernen Fahrzeugen installiert sind, kann es daher genügen, ein programmierbares Steuergerät für die Ausführung der oben beschriebenen Verfahren zu programmieren. Hierzu kann ein Computerprogrammprodukt computerlesbare Anweisungen aufweisen, die das programmierbare Steuergerät dazu anweisen, die Schritte des jeweiligen Verfahrens durchzuführen. Das Computerprogrammprodukt kann auf einem computerlesbaren Medium wie beispielsweise einer CD, einer DVD, einem Flashspeicher oder ähnlichem gespeichert sein.

Es wird angemerkt, dass mögliche Merkmale und Vorteile von Ausführungsformen der Erfindung hierin teilweise mit Bezug auf ein erfindungsgemäßes Verfahren und teilweise mit Bezug auf ein erfindungsgemäßes Steuergerät beschrieben sind. Ein Fachmann wird erkennen, dass die einzelnen Merkmale in geeigneter Weise miteinander kombiniert oder ausgetauscht werden können, insbesondere von dem Steuergerät auf das Verfahren und umgekehrt übertragen werden können, um auf diese Weise zu weiteren Ausführungsformen und möglicherweise Synergieeffekten zu gelangen.

### Kurze Beschreibung der Zeichnung

Nachfolgend werden Ausführungsformen mit Bezug auf die beigefügte Zeichnung beschrieben, wobei weder die Beschreibung noch die Zeichnung als die Erfindung einschränkend ausgelegt werden sollen.

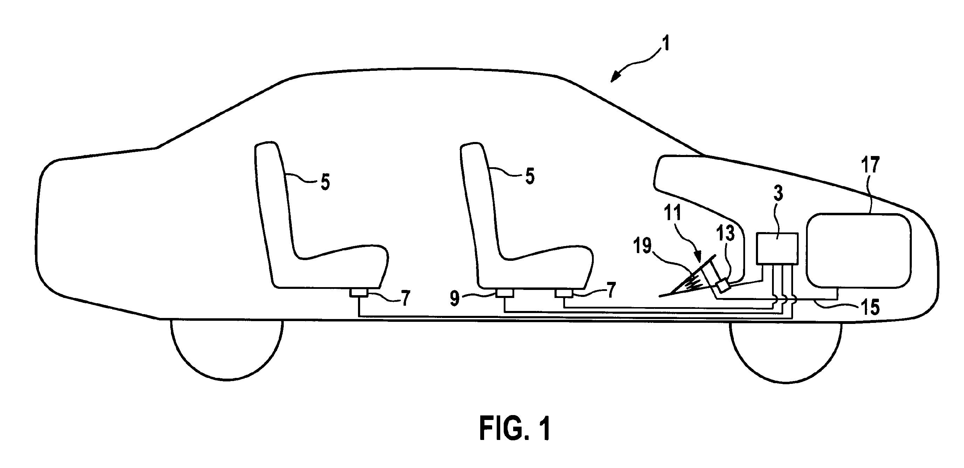

Fig. 1 zeigt ein Kraftfahrzeug mit einem Steuergerät zur Implementierung eines Verfahrens gemäß einer Ausführungsform der vorliegenden Erfindung.

Die Zeichnung ist lediglich schematisch und nicht maßstabsgetreu.

### Ausführungsformen der Erfindung

Fig. 1 zeigt ein Kraftfahrzeug 1, das mit einem haptischen Fahrpedal 11 ausgestattet ist. Das Fahrpedal 11 dient als Gaspedal und ist über einen Seilzug 15 mit einem Motor 17 oder über eine Leitung über ein Motor-Steuergerät (nicht dargestellt) mit dem Motor 17 des Fahrzeugs verbunden. Durch eine Feder 19 wird das Fahrpedal 11 in seine Ruhestellung geschoben.

Das Fahrpedal 11 ist als haptisches Fahrpedal ausgestaltet. Hierzu verfügt das Fahrpedal 11 über einen Aktuator 13, mit Hilfe dessen das Fahrpedal in eine gewünschte Richtung bewegt oder zu Vibrationen oder Pulsationen angeregt werden kann. Der Aktuator 13 kann beispielsweise als Elektromotor oder als Hydraulik ausgestaltet sein und ist sowohl mit dem beweglichen Fahrpedal 11 als auch mit einer Struktur der Karosserie verbunden.

Bei Betätigung des Aktuators 13 kann dieser beispielsweise das Fahrpedal 11 hin zu seiner Ruhestellung pressen und so den Gegendruck des Fahrpedals 11, den der Fahrer empfindet, zusätzlich zu dem von der Feder 19 generierten Gegendruck erhöhen. Alternativ kann das Fahrpedal 11 mit Hilfe des Aktuators 13 in Vibrationen versetzt werden. Beide Wirkungsweisen des Aktuators 13 kann der Fahrer haptisch über seinem auf dem Fahrpedal 11 ruhenden Fuß wahrnehmen, so dass auf diese Weise haptisch wahrnehmbare Signale an den Fahrer über das Fahrpedal übermittelt werden können.

In dem Fahrzeug 1 sind ferner Sitze 5 enthalten. Zumindest dem Fahrersitz, vorzugsweise aber allen Sitzen in dem Fahrzeug, ist zumindest ein Sitzsensor 7, 9 zugeordnet.

Die Sitzsensoren können als Sitzbelegungssensoren und/oder Gewichtssensoren 7 oder als Positionssensoren 9 ausgebildet sein. Ein Sitzbelegungssensor ermittelt hierbei lediglich, ob der zugeordnete Sitz von einer Person belegt ist oder nicht. Ein Gewichtssensor 7 kann zusätzlich noch zumindest eine grobe Information über das Gewicht des auf dem Sitz sitzenden Insassen ermitteln. Beispielsweise kann ein Sitzsensor 7 eine Gewichtsinformation in gewissen Clustern z.B. in 10-kg-Schritten angeben.

Ein Positionssensor 9 ist dazu ausgelegt, eine Information über die aktuelle Position eines zugeordneten Sitzes 5 innerhalb des Fahrzeugs 1 zu ermitteln. Dabei können Sitze typischerweise sowohl vor und zurück als auch hoch und runter in dem Fahrzeug 1 verlagert werden. Der Sitzsensor 9 kann zumindest eine dieser Bewegungsrichtung, vorzugsweise beide Bewegungsrichtungen, berücksichtigen und eine Information über die aktuelle Positionierung des Sitzes 5 ermitteln.

Ein Steuergerät 3 ist dazu vorgesehen, den Aktuator 13 des haptischen Fahrpedals 11 zu steuern. Das Steuergerät 3 kann dabei verschiedene Komfort-, Hinweis- und/oder Warn-Funktionalitäten implementieren, um dem Fahrer des Fahrzeugs 1 bei bestimmten Fahrsituationen über das Fahrpedal 11 ein haptisch wahrnehmbares Signal zu übermitteln. Für jede dieser Funktionalitäten kann ein bestimmter vordefinierter Rückmeldungstyp festgelegt sein, wobei sich z.B. die von dem Aktuator 13 erzeugte Gegenkraft, die konstant, vibrierend oder pulsierend erzeugt werden kann, je nach Rückmeldungstyp unterscheiden kann.

Um das von dem Steuergerät 3 und dem Aktuator 13 bewirkte haptisch wahrnehmbare Signal möglichst gut an bestimmte Fahrsituationen und an den jeweiligen Fahrer anpassen zu können, sind die Sitzsensoren 7, 9 zumindest des Fahrersitzes, vorzugsweise aber aller Sitze 5, mit dem Steuergerät 3 verbunden. Das Steuergerät 3 kann somit von den Sitzsensoren 7, 9 Informationen über die aktuelle Belegung und/oder das Gewicht eines auf einem Sitz 5 sitzenden Insassen sowie über die aktuelle Position des Sitzes 5 erhalten.

Beispielsweise kann das Steuergerät 3 aus dem von einem Gewichtssensor 7 ermittelten Gewicht des Fahrers Rückschlüsse auf eine geeignete Intensität eines von dem haptischen Fahrpedal 11 zu generierenden haptisch wahrnehmbaren Signals ziehen. Je nach Gewicht des Fahrers kann dabei z.B. eine Größe der Pedalgegenkraft und bei pulsierenden Rückmeldungen eventuell auch deren Amplitude angepasst werden, wobei für schwere Fahrer in der Regel größere Pedalgegenkräfte bzw. größere Amplituden geeignet erscheinen als für leichte Fahrer.

Die Anpassung der Intensität des haptisch wahrnehmbaren Signals kann dabei auf verschiedene Arten erfolgen. Beispielsweise kann die Intensität über einen Korrekturfaktor angepasst werden und abhängig von der von dem Gewichtssensor 7 übermittelten Gewichtsinformation individuell berechnet werden. Alternativ kann das Steuergerät 3 zur gewichtsabhängigen Steuerung des haptischen Fahrpedals 11 auf vordefinierte und im Steuergerät 3 abgelegte Parametersätze zugreifen. Als weitere Alternative kann das Steuergerät 3 eine optimale Rückmeldungsintensität aus einem zuvor ermittelten Kennfeld entnehmen. Dabei kann in dem Kennfeld neben der Gewichtsinformation auch eine Information über die aktuelle Positionierung des Sitzes enthalten sein.

Die von den Sitzsensoren 7, 9 ermittelten Sitzinformationen können auch in anderer Weise von dem Steuergerät 3 zur situationsgerechten Ansteuerung des haptischen Fahrpedals 11 genutzt werden.

Beispielsweise kann zur Implementierung eines Ausrollassistenten zusätzlich zu einer zuvor abgelegten Information über das Leergewicht des Fahrzeugs 11 eine Information über ein Gewicht der Fahrzeuginsassen ermittelt werden, um auf das Gesamtgewicht des Fahrzeugs rückschließen zu können. Hierzu können von jedem der Gewichtssensoren 7 der Sitze 5 in dem Fahrzeug 1 entsprechende Informationen über das Gewicht eines auf dem jeweiligen Sitz sitzenden Insassen ermittelt und an das Steuergerät 3 übertragen werden. Das Steuergerät 3 kann dann aus der Summe der Insassengewichte und dem Fahrzeugleergewicht das aktuelle Fahrzeuggesamtgewicht abschätzen und unter Berücksichtigung einer Information über die aktuelle Geschwindigkeit des Fahrzeugs 1 errechnen, wann der Fahrer "vom Gas gehen" sollte, damit das Fahrzeug 1 an einer bestimmten zukünftigen Position auf der Fahrstrecke, beispielsweise an einer Ortseinfahrt, eine bestimmte Sollgeschwindigkeit erreicht hat. Zu diesem Zeitpunkt kann das Steuergerät 3 das haptische Fahrpedal 11 zur Abgabe eines haptisch wahrnehmbaren Signals an den Fahrer ansteuern.

Ähnlich wie bei der oben beschriebenen angepassten Intensität des haptisch wahrnehmbaren Signals kann dabei der Zeitpunkt, zu dem das haptisch wahrnehmbare Signal des Ausrollassistenten abgegeben wird, über Korrekturfaktoren angepasst und abhängig von den ermittelten Insassengewichten individuell berechnet werden oder abhängig von der ermittelten Gewichtsinformation mit eingestellter Clusterung auf vordefinierte und im Steuergerät 3 abgelegte Parametersätze zurückgegriffen werden, um das haptische Fahrpedal 11 zu steuern.

Zur noch genaueren Einstellung des Zeitpunkts des haptischen Signals können weitere Informationen, beispielsweise über Steigung bzw. Gefälle der Fahrstrecke, geschwindigkeitsabhängige Roll- und/oder Luftwiderstände, Fahrbahnbeschaffenheit, etc. berücksichtigt werden.

Neben einer Verwendung in der Funktionalität eines Ausrollassistenten kann die über die Sitzsensoren ermittelte Information über das Gewicht der Insassen und das daraus ermittelbare Gesamtfahrzeuggewicht auch bei einer Funktionalität eines Kurvenwarnassistenten angewendet werden. Dabei kann das haptische Fahrpedal dem Fahrer beispielsweise signalisieren, wenn eine vorausliegende Kurve bei derzeitiger Geschwindigkeit und aktuellem Fahrzeuggesamtgewicht zu einer kritischen Fahrsituation führen könnte.

## Patentansprüche

1. Verfahren zum Steuern eines haptischen Fahrpedals (11) in einem Kraftfahrzeug (3),
**dadurch gekennzeichnet, dass** das Verfahren die folgenden Schritte aufweist:
Erfassen einer Sitzinformation über eine Belegung, Belastung und/oder Positionierung wenigstens eines Sitzes (5) in dem Kraftfahrzeug (1) mit Hilfe wenigstens eines Sitzsensors (7, 9),
Steuern des haptischen Fahrpedals (11) hinsichtlich einer Eigenschaft, mit der das Fahrpedal (11) einem Fahrer ein haptisch wahrnehmbares Signal übermittelt, unter Berücksichtigung der Sitzinformation.

2. Verfahren nach Anspruch 1, wobei die Sitzinformation eine Information über ein Gewicht eines auf einem Fahrersitz (5) sitzenden Fahrers beinhaltet und wobei beim Steuern des haptischen Fahrpedals (11) eine Intensität, mit der das haptische Fahrpedal dem Fahrer das haptisch wahrnehmbare Signal übermittelt, in Abhängigkeit von dem erfassten Gewicht des Fahrers eingestellt wird.

3. Verfahren nach Anspruch 1 oder 2, wobei die Sitzinformation eine Information über eine aktuelle Positionierung eines Fahrersitzes (5) beinhaltet und wobei beim Steuern des haptischen Fahrpedals (11) eine Intensität, mit der das haptische Fahrpedal dem Fahrer das haptisch wahrnehmbare Signal übermittelt, in Abhängigkeit von der erfassten Positionierung des Fahrersitzes (5) eingestellt wird.

4. Verfahren nach einem der Ansprüche 1 bis 3, wobei die Sitzinformation Informationen über eine Belegung von Sitzen (5) in dem Fahrzeug (1) und/oder über ein Gewicht von auf Sitzen (5) in dem Fahrzeug (1) sitzenden Personen beinhaltet und wobei beim Steuern des haptischen Fahrpedals (11) ein Zeitpunkt, zu dem das haptische Fahrpedal (11) dem Fahrer das haptisch wahrnehmbare Signal übermittelt, in Abhängigkeit von der erfassten Belegung und/oder dem erfassten Gewicht eingestellt wird.

5. Verfahren nach Anspruch 4, wobei aus den erfassten Informationen eine Abschätzung eines aktuellen Gesamtgewichts des Fahrzeugs (1) ermittelt wird und beim Steuern des haptischen Fahrpedals (11) der Zeitpunkt, zu dem das haptische Fahrpedal dem Fahrer das haptisch wahrnehmbare Signal übermittelt, in Abhängigkeit von dem ermittelten Gesamtgewicht eingestellt wird.

6. Verfahren nach Anspruch 5, wobei aus dem ermittelten Gesamtgewicht und einer erfassten Information über eine aktuelle Geschwindigkeit des Fahrzeugs (1) und eine zukünftig zu erreichende Geschwindigkeit des Fahrzeugs der Zeitpunkt, zu dem das haptische Fahrpedal dem Fahrer das haptisch wahrnehmbare Signal übermittelt, ermittelt wird.

7. Steuergerät (3) zum Steuern eines haptischen Fahrpedals (11) in einem Kraftfahrzeug (1), wobei das Steuergerät (3) dazu ausgelegt ist, ein Verfahren gemäß einem der Ansprüche 1 bis 6 durchzuführen.

8. Computerprogrammprodukt, welches computerlesbare Anweisungen aufweist, die ein programmierbares Steuergerät (3) dazu anweisen, ein Verfahren gemäß einem der Ansprüche 1 bis 6 durchzuführen.

9. Computerlesbares Medium mit einem darauf gespeicherten Computerprogrammprodukt gemäß Anspruch 8.

## Claims

1. Method for controlling a haptic accelerator pedal (11) in a motor vehicle (3),
**characterized in that** the method has the following steps of:
acquiring an item of seat information relating to occupancy, loading and/or positioning of at least one seat (5) in the motor vehicle (1) with the aid of at least one seat sensor (7, 9),
controlling the haptic accelerator pedal (11) with respect to a property which is used by the accelerator pedal (11) to transmit a haptically perceptible signal to a driver taking into account the seat information.

2. Method according to Claim 1, the seat information comprising an item of information relating to a weight of a driver sitting on a driver's seat (5), and an intensity with which the haptic accelerator pedal transmits the haptically perceptible signal to the driver being adjusted on the basis of the detected weight of the driver when controlling the haptic accelerator pedal (11).

3. Method according to Claim 1 or 2, the seat information comprising an item of information relating to current positioning of a driver's seat (5), and an intensity with which the haptic accelerator pedal transmits the haptically perceptible signal to the driver being adjusted on the basis of the detected positioning of the driver's seat (5) when controlling the haptic accelerator pedal (11).

4. Method according to one of Claims 1 to 3, the seat information comprising information relating to occupancy of seats (5) in the vehicle (1) and/or relating to a weight of persons sitting on seats (5) in the vehicle (1), and a time at which the haptic accelerator pedal (11) transmits the haptically perceptible signal to the driver being adjusted on the basis of the detected occupancy and/or the detected weight when controlling the haptic accelerator pedal (11).

5. Method according to Claim 4, an estimate of a current total weight of the vehicle (1) being determined from the acquired information, and the time at which the haptic accelerator pedal transmits the haptically perceptible signal to the driver being adjusted on the basis of the determined total weight when controlling the haptic accelerator pedal (11).

6. Method according to Claim 5, the time at which the haptic accelerator pedal transmits the haptically perceptible signal to the driver being determined from the determined total weight and an acquired item of information relating to a current speed of the vehicle (1) and a speed of the vehicle to be reached in future.

7. Control device (3) for controlling a haptic accelerator pedal (11) in a motor vehicle (1), the control device (3) being designed to carry out a method according to one of Claims 1 to 6.

8. Computer program product having computer-readable instructions which instruct a programmable control device (3) to carry out a method according to one of Claims 1 to 6.

9. Computer-readable medium having a computer program product according to Claim 8 stored thereon.

## Revendications

1. Procédé de commande d'une pédale tactile d'accélérateur (11) d'un véhicule automobile (3), **caractérisé en ce que** le procédé présente les étapes suivantes :
saisie d'une information de siège concernant l'occupation, la charge et/ou le positionnement d'au moins un siège (5) du véhicule automobile (1) à l'aide d'au moins un capteur (7, 9) de siège et
commande de la pédale tactile d'accélération (11) selon une propriété par laquelle la pédale d'accélérateur (11) transmet à un conducteur un signal tactile perceptible qui tient compte de l'information de siège.

2. Procédé selon la revendication 1, dans lequel l'information de siège contient une information concernant le poids du conducteur assis sur le siège (5) du conducteur et dans lequel, lors de la commande de la pédale tactile d'accélération (11), l'intensité à laquelle la pédale tactile d'accélérateur transmet au conducteur le signal tactile perceptible est réglée en fonction du poids du conducteur qui a été saisi.

3. Procédé selon les revendications 1 ou 2, dans lequel l'information de siège contient une information sur le positionnement effectif du siège (5) du conducteur, et dans lequel lors de la commande de la pédale tactile d'accélération (11), l'intensité à laquelle la pédale tactile d'accélérateur transmet au conducteur le signal tactile perceptible est réglée en fonction du positionnement qui a été saisi pour le siège (5) du conducteur.

4. Procédé selon l'une des revendications 1 à 3, dans lequel l'information de siège contient des informations concernant l'occupation des sièges (5) du véhicule (1) et/ou le poids des personnes assises sur les sièges (5) du véhicule (1), et dans lequel lors de la commande de la pédale tactile d'accélération (11), l'instant auquel la pédale tactile d'accélération (11) transmet au conducteur le signal tactile perceptible est réglé en fonction de l'occupation qui a été saisie et/ou du poids qui a été saisi.

5. Procédé selon la revendication 4, dans lequel à partir des informations saisies, une estimation du poids total effectif du véhicule automobile (1) est déterminée et lors de la commande de la pédale tactile d'accélération (11), l'instant auquel la pédale tactile d'accélération transmet au conducteur le signal tactile perceptible est réglé en fonction du poids total qui a été déterminé.

6. Procédé selon la revendication 5, dans lequel l'instant auquel la pédale tactile d'accélération transmet au conducteur le signal tactile perceptible est déterminé à partir du poids total qui a été déterminé, d'une information qui a été saisie concernant la vitesse effective du véhicule (1) ainsi que de la vitesse que le véhicule doit atteindre dans le futur.

7. Appareil de commande (3) qui commande une pédale tactile d'accélération (11) d'un véhicule automobile (1), l'appareil de commande 3) étant conçu pour exécuter un procédé selon l'une des revendications 1 à 6.

8. Produit de programme informatique qui présente des indications lisibles par ordinateur qui indiquent à un appareil de commande programmable (3) comment exécuter un procédé selon l'une des revendications 1 à 6.

9. Support lisible par ordinateur, sur lequel est conservé en produit de programme informatique selon la revendication 8.
